Europäisches Patentamt

European Patent Office

Office européen des brevets

(19)

(11) Veröffentlichungsnummer : **0 248 859**
B1

# (12) EUROPÄISCHE PATENTSCHRIFT

(45) Veröffentlichungstag der Patentschrift :
13.12.89

(21) Anmeldenummer : 87900103.0

(22) Anmeldetag : 04.12.86

(86) Internationale Anmeldenummer :
PCT/EP 86/00709

(87) Internationale Veröffentlichungsnummer :
WO/8703731 (18.06.87 Gazette 87/13)

(51) Int. Cl.⁴ : **G 11 B 7/08**, G 11 B 21/08

(54) VERFAHREN FÜR DAS SPURSUCHEN BEI EINEM ROTIERENDEN PLATTENFÖRMIGEN INFORMATIONSTRÄGER UND SCHALTUNGSANORDNUNG ZUR DURCHFÜHRUNG DES VERFAHRENS.

(30) Priorität : 10.12.85 DE 3543568

(43) Veröffentlichungstag der Anmeldung :
16.12.87 Patentblatt 87/51

(45) Bekanntmachung des Hinweises auf die Patenterteilung : 13.12.89 Patentblatt 89/50

(84) Benannte Vertragsstaaten :
AT BE CH DE FR GB IT LI LU NL SE

(56) Entgegenhaltungen :
EP--A-- 0 149 888
EP--A-- 9 030 379

(73) Patentinhaber : Deutsche Thomson-Brandt GmbH
Hermann-Schwer-Strasse 3 Postfach 1307
D-7730 Villingen-Schwenningen (DE)

(72) Erfinder : BAAS, Dieter
Sofienstrasse 10
D-7730 Villingen-Schwenningen (DE)

EP 0 248 859 B1

## Beschreibung

Die Erfindung betrifft ein Verfahren für das Spursuchen bei einem rotierenden plattenförmigen Informationsträger, auf dessen Spuren Daten schreibbar und/oder aus dessen Spuren Daten lesbar sind mittels eines Schreib- und/oder Lesekopfes, der mittels eines regelbaren Grobantriebes und mittels eines mit dem Grobantrieb mechanisch verbundenen regelbaren Feinantriebes über jeder Spur des Informationsträgers positionierbar ist, wobei zum Spursuchen der Regelkreis des Feinantriebs ausgeschaltet wird und ein Steuersignal an den Feinantrieb gelegt wird um mechanische Schwingungen des Feinantriebs zu dämpfen, die in Folge der durch die Bewegung des Grobantriebs verursachten Trägheitskräfte auftreten.

Rotierende Informationsträger, die mittels eines Lesekopfes, der mit einem optischen System zum Lesen der Daten ausgestattet ist, lesbar sind, finden z. B. bei CD-Plattenspielern Verwendung. Der Einsatz solcher rotierender plattenförmiger Informationsträger, die optisch gelesen werden, ist jedoch keineswegs auf Plattenspieler beschränkt. Es werden auch Videorecorder mit optisch abtastbaren Platten angeboten. Im einen Fall spricht man von der Schallplatte, während im anderen Fall von der Bildplatte die Rede ist.

Der Informationsträger, die CD-Platte - CD steht für Compact Disc - rotiert mit einer wesentlich höheren Geschwindigkeit als die Platte bei einem gewöhnlichen Schallplattenspieler. Die Informationen, z. B. Schall, Bildsignale oder beide zusammen, die auf der CD-Platte entlang einer Spirale oder auf konzentrischen Kreisen abgespeichert sind, werden mittels eines optischen Systems im Lesekopf, das meist mit Laser arbeitet, ausgelesen. Die einzelnen Windungen der Spirale oder die einzelnen konzentrischen Kreise bilden die Spuren.

In Philips Technical Review, Volume 40, 1982, No. 6 ist im dem Aufsatz « The Compact Disc Digital Audio System » von V. G. Carasso, J. B. H. Peek und J. P. Sinjou der Aufbau eines CD-Plattenspielers beschrieben.

Um den Informationsträger, die CD-Platte, abzutasten, muß der Lesekopf genau von Spur zu Spur geführt werden. Im beliebige Daten auslesen zu können, muß ferner der Lesekopf genau auf jede gewünschte Spur positioniert werden können. Führung und Positionierung des Lesekopfes erfolgen mittels eines regelbaren Grob- und eines regelbaren Feinantriebes, der mit dem Grobantrieb mechanisch verbunden ist. Der Grobantrieb kann z. B. aus einer Spindel bestehen, die von einem Stellmotor angetrieben wird. Mit ihm wird die grobe Positionierung erzielt, während der infolge der mechanischen Verbindung mitgeführte Feinantrieb die genaue Positionierung übernimmt. Die Bewegungen des Grobantriebes erfolgen bezüglich des Mittelpunktes, d. h. des Drehpunktes, der rotierenden Platte in radialer Richtung. Der Feinantrieb ist mechanisch gelagert und wird mittels Elektromagneten ausgelenkt, so daß der abtastende Lichtstrahl um einen vorgegebenen Betrag aus der Lotrechten in radialer Richtung sowohl zum Drehpunkt hin als auch vom Drehpunkt weg auslenkbar ist. Mit dieser Auslenkung wird die Feineinstellung auf die gewünschte Spur bewirkt.

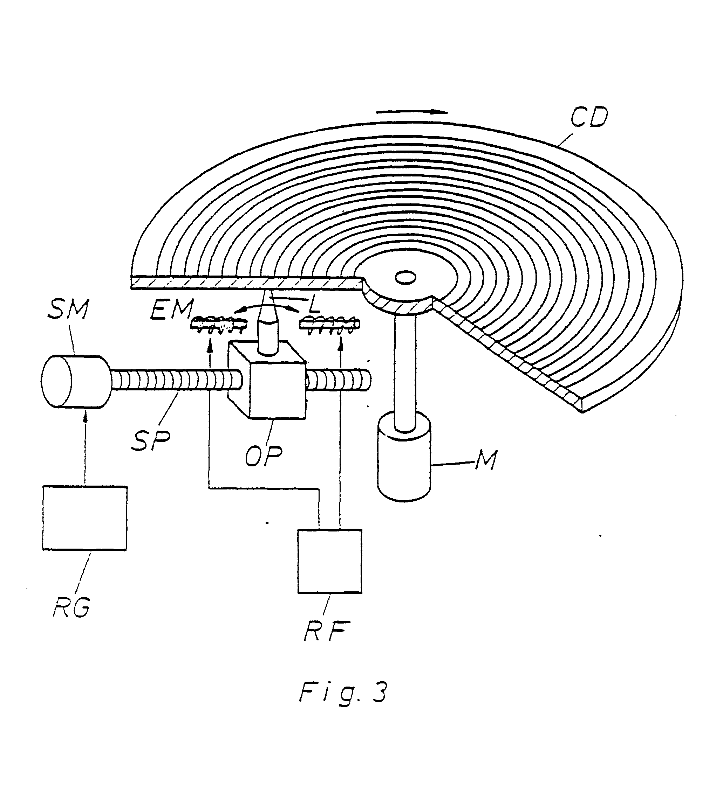

In Figur 3 ist eine derartige Anordnung abgebildet. Die CD-Platte CD wird von einem Motor M angetrieben. Der Lesekopf, häufig auch optisches Abtastsystem oder optical pick-up genannt, wird mittels der Spindel SP grob positioniert. Ein Stellmotor SM, der vom Regler RG für den Grobantrieb gesteuert wird, treibt die Spindel SP an. Der Regler RF für den Feinantrieb steuert die Elektromagnete EM, mittels denen der abtastende Lichtstrahl L aus der Lotrechten auslenkbar ist.

Bei der Spurensuche lassen sich Spuren, die nicht allzu weit auseinander Liegen, noch mit dem Feinantrieb finden. Sollten aber die Daten einer weiter entfernten Spur ausgelesen werden, so muß der Grobantrieb eingeschaltet werden. Um die Zugriffszeiten gering zu halten, muß der Grobantrieb mit hoher Geschwindigkeit über die Spuren geführt werden.

In der EPA 0 090 379 ist eine Vorrichtung mit einem Grob- und einem Feinantrieb zum Lesen eines rotierenden Informationsträgers beschrieben. In dieser EPA wird darauf hingewiesen, daß hohe Geschwindigkeiten des Grobantriebes infolge der auftretenden Trägheitskräfte zu unerwünschten mechanischen Schwingungen des Feinantriebes führen, so daß der Regelkreis des Feinantriebes nicht mehr einrasten kann. Deshalb wird der Regelkreis des Feinantriebes sofort unterbrochen, wenn der Grobantrieb anläuft.

Gleichzeitig wird an den Feinantrieb ein Beschleunigungssignal angelegt, das mittels einer Vorrichtung zum Messen der Beschleunigung und der Geschwindigkeit erzeugt wird und der augenblicklichen Bewegung des Grobantriebes entspricht. Während der gesamten Bewegungsdauer des Grobantriebs bleibt der Regelkreis des Feinantriebs ausgeschaltet und das Beschleunigungssignal an den Feinantrieb angelegt. Weil der Grobantrieb in der ersten Hälfte der Bewegungsphase vom Stillstand an beschleunigt wird, in der zweiten Hälfte dagegen bis zum Stillstand abgebremst wird, muß das Vorzeichen des Beschleunigungssignals beim Übergang von der Beschleunigungsphase in die Bremsphase umgekehrt werden. Aus diesem Grund, ist die Vorrichtung aus der EP-A-0090379 mit einer Vorrichtung zum Messen der Beschleunigung und der Geschwindigkeit des Grobantriebs ausgestattet. Durch das Beschleunigungssignal werden die mechanischen Schwingungen des Feinantriebes so stark gedämpft, daß der Regelkreis des Feinantriebes einrasten kann, wenn der Grobantrieb angehalten hat.

Zu Beginn der Suche einer Spur, die im weiteren Verlauf als Zielspur bezeichnet wird, wird zunächst die Anzahl der zwischen der zu suchenden und der gerade abgetasteten Spur, die im weiteren Verlauf als Anfangsspur bezeichnet wird, festgestellt. Während des Suchens werden nun die vom Feinantrieb überstrichenen Spuren gezählt.

Geringe Geschwindigkeiten des Grobantriebes beim Suchen der Zielspur, wie sie insbesondere beim Beschleunigen und beim Abbremsen des Grobantriebes auftreten, bedingen nicht nur größere Zugriffszeiten, sondern verursachen, wie im folgenden erläutert wird, Fehler bei der Spurensuche infolge der Exzentrizität der Platte und des Plattenantriebes. Auf derartige Fehler wird in der genannten EPA aber nicht eingegangen.

Weil die Exzentrizität der Platte selbst und die des Plattenantriebes verglichen mit dem Abstand zweier benachbarter Spuren sehr groß ist, etwa 200-300 μm verglichen mit 1,6 μm, kann es bei geringen Geschwindigkeiten des Grobantriebes vorkommen, daß eine oder mehrere Spuren, über die bereits hinweggefahren wurde und die deshalb bereits gezählt wurden, ein zweites Mal oder gar mehrmals gezählt werden, denn der Grobantrieb fährt in solchen Fällen zwei oder mehrmals über diese Spuren. Dadurch wird der vom Grobantrieb mitgeführte Feinantrieb so weit von der Zielspur entfernt positioniert, daß er den Lichtstrahl nicht mehr auf die Zielspur richten kann.

Eine Möglichkeit, eine durch zu geringe Geschwindigkeit des Grobantriebes verursachte falsche Positionierung zu vermeiden, besteht darin, beim Zählen der Spuren mittels einer Schaltungsanordnung, einer sogenannten Richtungslogik, festzustellen, in welcher Richtung die Spuren tatsächlich vom Grobantrieb überstrichen werden. Weil diese Lösung jedoch teuer ist, bleibt sie den teuren Geräten der gehobenen Klasse vorbehalten.

Bei der Vorrichtung aus der EPA 0 090 379 wird beim Spursuchen der Grobantrieb gleichförmig beschleunigt, bis er in der Mitte zwischen der Anfangs- und der Zielspur angekommen ist. Seine Geschwindigkeit steigt deshalb bis zu diesem Punkt linear an. Weil in der Mitte zwischen der Anfangs- und der Zielspur die Beschleunigung ihr Vorzeichen wechselt, während ihr Betrag beibehalten wird, wird der Grobantrieb gleichförmig verzögert ; seine Geschwindigkeit nimmt deshalb von der Mitte zwischen der Anfangs- und der Zielspur an linear ab, bis sie schließlich, wenn der Grobantrieb an der Zielspur angekommen ist, zu Null wird. Zu Beginn und am Ende der Bewegung des Grobantriebes, d. h. in der Nähe der Anfangs- und der Zielspur, kann seine Geschwindigkeit so klein werden, daß die erwähnten Fehler infolge der Exzentrizität von Platte und Plattenantrieb auftreten können. Um mit Sicherheit diese Fehler ausschliessen zu können, benötigt die Vorrichtung aus der EPA 0 090 379 eine sogenannte Richtungslogik, die feststellt, in welcher Richtung eine Spur auf dem Informationsträger tatsächlich überstrichen wird. Die Richtungslogik und die Vorrichtung zum Messen der Geschwindigkeit und der Beschleunigung erhöhen den Aufwand und verteuern dadurch Geräte, die mit der Vorrichtung, die in der genannten EPA beschrieben ist, ausgestattet sind.

Aufgabe der Erfindung ist es deshalb, ein Verfahren für das Spursuchen bei einem rotierenden plattenförmigen Informationsträger anzugeben, das schnelle Zugriffszeiten ermöglicht, das einerseits mit geringem Schaltungsaufwand, insbesondere ohne eine Richtungslogik und ohne eine Vorrichtung zum Messen der Geschwindigkeit und der Beschleunigung des Grobantriebes realisierbar ist, und bei dem andererseits Fehler infolge der Exzentrizität des rotierenden plattenförmigen Informationsträgers und seines Antriebes vermieden werden.

Die Erfindung löst diese Aufgabe dadurch, daß die Bremsphase, des Grobantriebes durch hohe Verzögerung kurz gehalten ist, daß das Steuersignal zur Dämpfung der mechanischen Schwingungen des Feinantriebs nur während der Bremsphase an den Feinantrieb gelegt wird und zugleich der Regelkreis des Feinantriebs während der Bremsphase ausgeschaltet ist.

In den Ansprüchen 4 und 5 sind Schaltungsanordnungen zur Durchführung des erfindungsgemäßen Verfahrens angegeben.

Es zeigen

die Figur 1 'eine Schaltungsanordnung zur Durchführung des erfindungsgemäßen Verfahrens

die Figur 2 Diagramme, in denen die Bewegungen des Grobantriebes in Abhängigkeit von den Steuersignalen für den Fein- und Grobantrieb dargestellt sind

die Figur 3 ein optisches Abtastsystem mit einem Grob- und Feinantrieb.

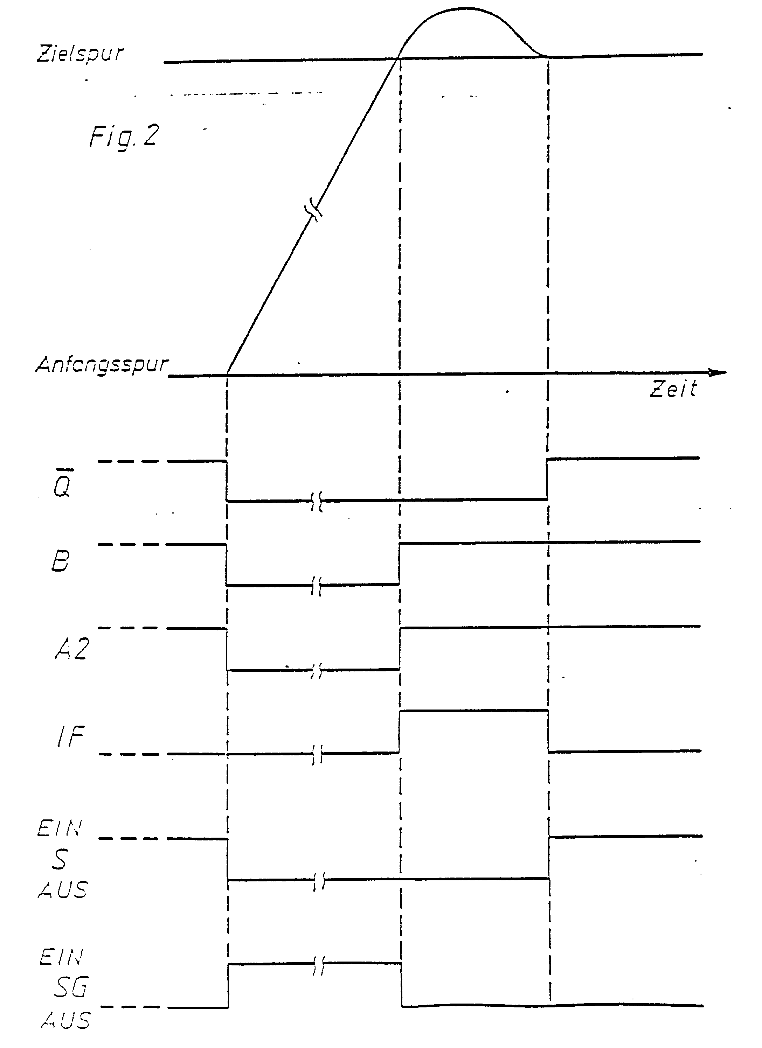

Anhand der Diagramme aus der Figur 2 wird die Erfindung nun erläutert.

In Figur 2 ist im ersten Diagramm die Bewegung des Grobantriebes von der Anfangsspur bis zur Zielspur über der Zeit aufgetragen. Wenn der Grobantrieb bei der Zielspur oder in einem vorgebbaren Bereich vor der Zielspur angekommen ist, bewirkt ein Steuersignal, das im 7. Diagramm gezeigt ist, daß der Grobantrieb sehr schnell mit hoher Verzögerung abgebremst wird. Gleichzeitig mit diesem Steuersignal für den Grobantrieb wird ein weiteres Steuersignal, dargestellt im 5. Diagramm, an den Feinantrieb gelegt, dessen Regelkreis, wie das 6. Diagramm zeigt, ausgeschaltet ist. Das Steuersignal am Feinantrieb, das höchstens für die Dauer der Bremsphase anliegt, bewirkt, daß mechanische Schwingungen des Feinantriebes stark gedämpft werden. Das Ende des Steuersignals am Feinantrieb dient als Kriterium für das Einschalten des Regelkreises des Feinantriebes, der wegen der starken Dämpfung seiner mechanischen Schwingungen nun leicht auf die Zielspur regelbar ist. Deshalb kann der Grobantrieb bei der Spursuche mit hoher Geschwindigkeit über die Spuren fahren und sehr schnell mit großer Verzögerung in der Nähe oder bei der Zielspur gebremst werden. Einerseits werden dadurch bei der Spursuche kurze Zugriffszeiten erzielt, während andererseits Fehler infolge der Exzentrizität des plattenförmigen Informationsträgers und seines Antriebes vermieden werden.

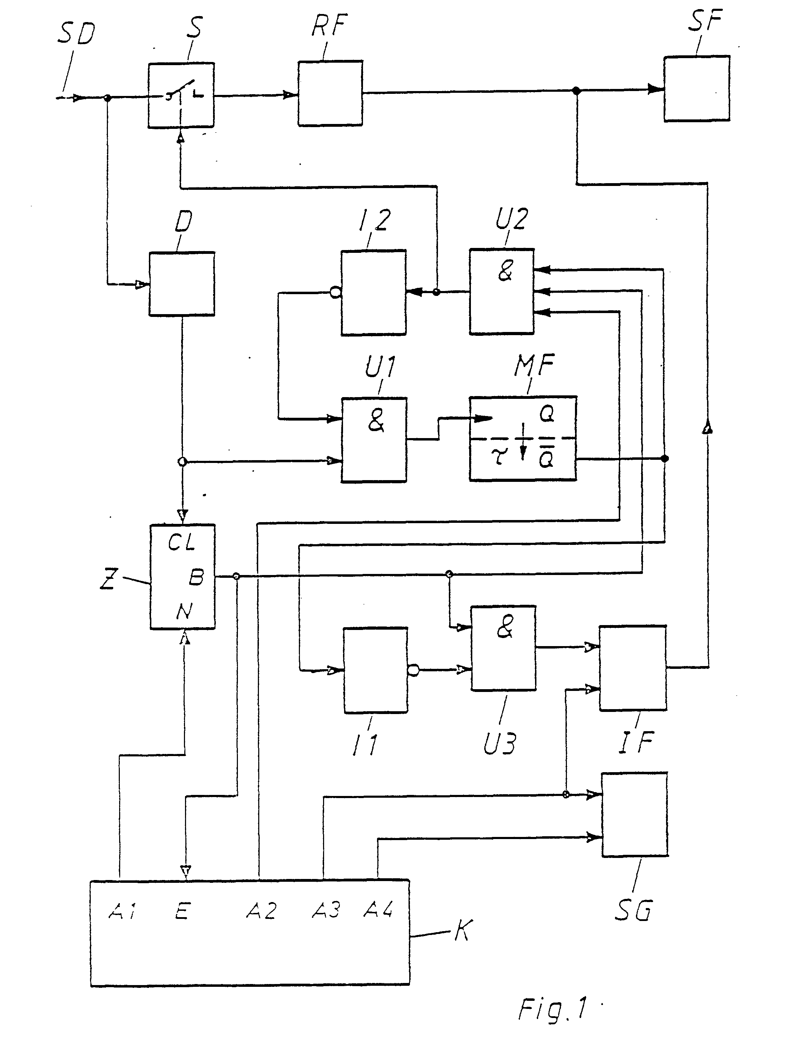

Der schaltungstechnische Aufwand zur Durchführung des erfindungsgemäßen Verfahrens ist, wie anhand der in Figur 1 gezeigten Schaltungsanordnung im folgenden dargelegt wird, gering, denn es werden weder eine sogenannte Richtungslogik noch eine Vorrichtung zum Messen der Geschwindigkeit und der Beschleunigung benötigt. Es ist nicht wie bei der Vorrichtung gemäß der EPA 0 090 379 nötig, daß der Regelkreis des Feinantriebs während der gesamten Bewegungsdauer des Grobantriebs ausgeschaltet bleibt und ein Beschleunigungssignal an den Feinantrieb gelegt wird, dessen Vorzeichen beim Übergang von der Beschleunigungsphase in die Bremsphase des Grobantriebs umgekehrt werden muß.

In Figur 1 ist an den einen Kontakt eines steuerbaren Schalters S und an den Eingang eines Detektors D das Spurdetektionssignal SD angelegt, das anzeigt, wenn von einer Spur auf die nächste gesprungen wird. Der andere Kontakt des steuerbaren Schalters S ist mit dem Eingang des Reglers RF des Feinantriebes verbunden, dessen Ausgang an den Eingang des Stellgliedes SF für den Feinantrieb angeschlossen ist. Der Ausgang des Detektors D ist mit dem Takteingang CL eines Zähler Z und mit dem ersten Eingang eines ersten Und-Gatters U1 verbunden, dessen Ausgang mit dem Eingang einer monostabilen Kippstufe MF verbunden ist. Der Setzeingang N des Zählers Z, dessen Ausgang B mit dem ersten Eingang eines zweiten Und-Gatters U2, mit dem ersten Eingang eines dritten Und-Gatters U3 und mit einem Eingang E einer Kontrolleinheit K verbunden ist, ist mit einem ersten Ausgang A1 der Kontrolleinheit K verbunden. Ein zweiter Ausgang A2 der Kontrolleinheit K ist mit dem zweiten Eingang des zweiten Und-Gatters U2 verbunden, dessen dritter Eingang mit dem Q̅-Ausgang der monostabilen Kippstufe MF und mit dem Eingang eines ersten Inverters I1 verbunden ist. Der Ausgang des ersten Inverters I1 ist mit dem zweiten Eingang des dritten Und-Gatters U3 verbunden, dessen Ausgang mit einem ersten Eingang eines Impulsformers IF verbunden ist. Der Ausgang des Impulsformers IF ist mit dem Eingang des Stellgliedes SF des Feinantriebes verbunden. Der Ausgang des zweiten Und-Gatters U2 ist einerseits mit dem Eingang eines zweiten Inverters I2, dessen Ausgang mit dem zweiten Eingang des ersten Und-Gatters U1 verbunden ist, und andrerseits mit dem Steuereingang des steuerbaren Schalters S verbunden. Ein dritter Ausgang A3 der Kontrolleinheit K ist mit einem zweiten Eingang des Impulsformers IF und mit dem einen Eingang des Stellgliedes SG des Grobantriebes verbunden, dessen anderer Eingang mit einem vierten Ausgang A4 der Kontrolleinheit K verbunden ist.

Anhand der in Figur 2 gezeigten Diagramme wird die Schaltungsanordnung aus Figur 1 erläutert.

Diese Diagramme zeigen die Bewegung des Grobantriebes und damit des Lesekopfes von der Anfangs- bis zur Zielspur, das Signal am Q̅-Ausgang der monostabilen Kippstufe MF, das Signal am Ausgang B des Zählers Z, das Signal am zweiten Ausgang A2 der Kontrolleinheit K, das Signal am Ausgang des Impulsformers IF sowie den Zustand des steuerbaren Schalters S und des Stellgliedes SG des Grobantriebes in Abhängigkeit von der Zeit.

Zunächst wird der normale Betriebsfall angenommen, während dem der Feinantrieb auf eine Spur geregelt wird und die Daten aus dieser Spur gelesen werden. In diesem Fall sind die Änderungen des Spurdetektionssignales SD so gering, daß der Detektor D nicht anspricht. Er gibt deshalb an seinem Ausgang eine logische Null ab, die am Takteingang CL des Zählers Z und am ersten Eingang des Und-Gatters U1 anliegt. Weil der Zähler Z deshalb keine Zählimpulse erhält, bleibt er im Grundzustand, in dem er an seinem Ausgang B eine logische Eins abgibt. Weil am ersten Eingang des ersten Und-Gatters U1 eine logische Null anliegt, wird die monostabile Kippstufe MF nicht gekippt, sondern bleibt ebenso wie der Zähler Z im Grundzustand. An ihrem Q̅-Ausgang und somit auch am dritten Eingang des zweiten Und-Gatters U2 liegt deshalb eine logische Eins. Weil am ersten Eingang des zweiten Und-Gatters U2 die logische Eins vom Ausgang B des Zählers Z anliegt und in dem hier beschriebenen Betriebsfall die Kontrolleinheit K an den zweiten Eingang des zweiten Und-Gatters U2 eine logische Eins abgibt, liegt an allen drei Eingängen des zweiten Und-Gatters U2 und damit auch an seinem Ausgang eine logische Eins. Diese logische Eins bewirkt, daß der steuerbare Schalter S geschlossen ist. Bei geschlossenem steuerbaren Schalter S wird das Spurdetektionssignal SD dem Regler RF des Feinantriebes zugeführt, der über das Stellglied SF den Feinantrieb genau auf der Spur führt, so daß Daten ausgelesen werden können. Weil die logische Eins am Q̅-Ausgang der monostabilen Kippstufe MF über den ersten Inverter I1 bewirkt, daß das dritte Und-Gatter U3 gesperrt ist, gibt der Impulsformer IF kein Signal an den Eingang des Stellgliedes SF des Feinantriebes.

Im folgenden wird die Funktionsweise der Schaltungsanordnung beim Spursuchen erklärt.

Der Einfachheit halber sei angenommen, daß die Zielspur z. B. 100 Spuren von der Anfangsspur entfernt liegt. Zunächst lädt die Kontrolleinheit K über ihren ersten Ausgang A1 den Zähler Z auf den Zählerstand 100 oder einen Zählerstand knapp unter 100, z. B. 95. Darauf gibt der Zähler Z an seinem Ausgang B eine logische Null ab. Die Kontrolleinheit K gibt an ihrem zweiten Ausgang A2 ebenfalls eine logische Null ab und schaltet über ihren dritten Ausgang A3 und über ihren vierten Ausgang A4 das Stellglied SG für den Grobantrieb ein, das z. B. ein Elektromotor sein kann. Wegen der logischen Null an seinem ersten und an seinem zweiten Eingang gibt das zweite Und-Gatter U2 an seinem Ausgang ebenfalls eine logische Null ab, die den steuerbaren Schalter S öffnet, so daß der Regler RF des Feinantriebes ausser Betrieb gesetzt wird. Weil jetzt wegen des zweiten Inverters I2 eine logische Eins am zweiten Eingang des ersten Und-Gatters U1 liegt, wird die monostabile Kippstufe MF von den Impulsen des Detektors D gesetzt, der jedesmal einen Impuls abgibt, wenn eine Spur auf dem Informationsträger überstrichen wird. Da am $\overline{Q}$-Ausgang der monostabilen Kippstufe MF nun eine logische Null liegt, liegen alle drei Eingänge des zweiten Und-Gatters U2 auf logisch Null, während am zweiten Eingang des dritten Und-Gatters U3 wegen des ersten Inverters I1 eine logische Eins anliegt. Jeder Impuls, der am Ausgang des Detektors D beim Überstreichen einer Spur abgegeben wird, erniedrigt den Zählerstand des Zählers Z um 1. Die Zeitkonstante τ der monostabilen Kippstufe MF ist so groß gewählt, daß sie nicht zurückkippt, solange der Grobantrieb eingeschaltet ist und die Zielspur gesucht wird. Mit anderen Worten heißt dies, daß der Wechsel von einer Spur zur nächsten in kürzerer Zeit erfolgt als die Zeitkonstante τ der monostabilen Kippstufe MF beträgt. Wenn die Zielspur oder die fünfte Spur vor der Zielspur erreicht ist, ist bei den angenommenen Zahlenbeispielen der Zählerstand des Zählers Z auf Null gesunken. Er gibt deshalb an seinem Ausgang B eine logische Eins ab, die bewirkt, daß die Kontrolleinheit K an ihrem zweiten Ausgang A2 eine logische Eins abgibt und den Grobantrieb ausschaltet, wodurch der Bremsvorgang eingeleitet wird. Ausserdem wird durch die logische Eins am Ausgang B des Zählers Z das dritte Und-Gatter U3 freigegeben. Die logische Eins an seinem Ausgang bewirkt nun, daß der Impulsformer IF das Steuersignal an das Stellglied SF des Feinantriebes abgibt, so daß Schwingungen des Feinantriebes infolge der beim Abbremsen des Grobantriebes auftretenden Trägheitskräfte stark gedämpft werden. Über ein Signal an ihrem dritten Ausgang A3 bewirkt die Kontrolleinheit K, daß der Feinantrieb durch das Steuersignal am Ausgang des Impulsformers IF stets in entgegengesetzter Richtung zur Bewegungsrichtung des Grobantriebes ausgelenkt wird : Bewegt sich der Grobantrieb zum Mittelpunkt des Informationsträgers hin, so wird der Feinantrieb durch das Steuersignal am Ausgang des Impulsformers IF vom Mittelpunkt weg ausgelenkt, während er in entgegengesetzter Richtung — radial nach innen — ausgelenkt wird, wenn der Grobantrieb vom Mittelpunkt weg in Richtung des Plattenrandes bewegt wird. Solange das Steuersignal des Impulsformers IF am Stellglied SF des Feinantriebes anliegt, bleibt sein Regler RF ausser Betrieb, da der steuerbare Schalter S wegen der logischen Null am Ausgang des zweiten Und-Gatters U2 geöffnet bleibt. Weil während des Bremsens des Grobantriebes die Spuren in immer größeren Zeitabständen überstrichen werden, nimmt die Dauer zwischen zwei aufeinander folgenden Impulsen, die der Detektor D an den Zähler Z und über das erste Und-Gatter U1 an die monostabile Kippstufe MF abgibt, ständig zu, bis schließlich die monostabile Kippstufe MF in den Grundzustand zurückkippt, weil die Zeit zwischen zwei aufeinander folgenden Impulsen größer als die Zeitkonstante τ der monostabilen Kippstufe MF wird. Der Wechsel von einer Spur zur nächsten dauert jetzt länger als die Zeitkonstante τ der monostabilen Kippstufe MF. Durch das Zurückkippen der monostabilen Kippstufe MF erscheint an ihrem $\overline{Q}$-Ausgang anstelle der logischen Null nun wieder eine logische Eins. Diese logische Eins bewirkt, daß wegen des ersten Inverters I1 das dritte Und-Gatter U3 gesperrt wird und daß am Ausgang des zweiten Und-Gatters U2 wieder eine logische Eins erscheint, die den steuerbaren Schalter S schließt. Durch das Sperren des dritten Und-Gatters U3 wird verhindert, daß der Impulsformer IF weiterhin das Steuersignal zur Dämpfung der Schwingungen an das Stellglied SF des Feinantriebes abgibt, während gleichzeitig durch das Schließen des steuerbaren Schalters S der Regler RF des Feinantriebes wieder in Betrieb gesetzt wird, damit der Feinantrieb auf der gefundenen Zielspur geführt werden kann. Der Zähler Z und die monostabile Kippstufe MF befinden sich nun wieder in ihrem eingangs erläuterten Grundzustand, denn an allen drei Eingängen des zweiten Und-Gatters U2 liegt eine logische Eins. Beim Regeln des Feinantriebes auf eine Spur sind die Änderungen des Spurdetektionssignales SD, worauf bereits hingewiesen wurde, so gering, daß der Detektor D keine Impulse an den Zähler Z gibt.

Ein besonderer Vorteil der Schaltungsanordnung aus Figur 1 besteht darin, daß der Feinantrieb beim Bremsen des Grobantriebes vom Steuersignal stets in entgegengesetzter Richtung zur Bewegungsrichtung des Grobantriebes ausgelenkt wird. Weil durch diese Rückwärtsbewegung des Feinantriebes seine Geschwindigkeit relativ zu den Spuren der Platte geringer wird als die des Grobantriebes, kann der Regelkreis des Feinantriebes früher eingeschaltet werden, als wenn die Geschwindigkeiten der beiden Antriebe gleich groß wären. Durch das frühere Einschalten des Regelkreises des Feinantriebes werden die Zugriffszeiten verkürzt.

Eine einfachere Schaltungsanordnung zur Durchführung des erfindungsgemäßen Verfahrens unterscheidet sich von der in Figur 1 gezeigten Schaltungsanordnung dadurch, daß der Impulsformer IF entfällt und der Ausgang des dritten Und-Gatters U3 unmittelbar mit dem Eingang des Stellgliedes SF des Feinantriebes verbunden ist. Bei dieser Schaltungsanordnung wird der Feinantrieb durch das Steuersignal nicht stets in entgegengesetzter Richtung zur Bewegungsrichtung des Grobantriebes sondern immer in die gleiche Richtung bis zu einem mechanischen Anschlag ausgelenkt.

Beide Schaltungsanordnungen kommen im Gegensatz zu der Vorrichtung aus der EPA 0 090 379 ohne Vorrichtung zum Messen der Beschleunigung und Geschwindigkeit des Grobantriebes aus. Sie benötigen keine sogenannte Richtungslogik, die feststellt, in welcher Richtung der Lesekopf tatsächlich über die Spuren fährt, weil Geschwindigkeit und Beschleunigungen des Grobantriebes so groß gewählt sind, daß es nicht zu den eingangs erwähnten Fehlern infolge der Exzentrizität des Informationsträgers und seines Antriebes kommen kann. Weil das erfindungsgemäße Verfahren deshalb mit relativ geringem schaltungstechnischen Aufwand realisierbar ist, lassen sich die Herstellungskosten für Geräte, z. B. CD-Plattenspieler, die nach dem erfindungsgemäßen Verfahren arbeiten, senken.

Der Schreib- und/oder Lesekopf ist keineswegs auf ein optisches Abtastsystem beschränkt. Es kann ebenso ein kapazitives, induktives oder anderes Abtastsystem Verwendung finden.

**Patentansprüche**

1. Verfahren für das Spursuchen bei einem rotierenden plattenförmigen Informationsträger, auf dessen Spuren Daten schreibbar und/oder aus dessen Spuren Daten lesbar sind mittels eines Schreib- und/oder Lesekopfes, der mittels eines regelbaren Grobantriebes und mittels eines mit dem Grobantrieb mechanisch verbundenen regelbaren Feinantriebes über jeder Spur des Informationsträgers positionierbar ist, wobei zum Spursuchen der Regelkreis des Feinantriebes ausgeschaltet wird und ein Steuersignal an den Feinantrieb gelegt wird, um mechanische Schwingungen des Feinantriebes zu dämpfen, die in Folge der durch die Bewegung des Grobantriebes verursachten Trägheitskräfte auftreten, dadurch gekennzeichnet, daß die Bremsphase des Grobantriebes durch hohe Verzögerung kurz gehalten ist, daß das Steuersignal zur Dämpfung der mechanischen Schwingungen des Feinantriebes nur während der Bremsphase an den Feinantrieb gelegt wird, und zugleich der Regelkreis des Feinantriebes während der Bremsphase ausgeschaltet ist.

2. Verfahren nach Anspruch 1, dadurch gekennzeichnet, daß der Regelkreis des Feinantriebs wieder eingeschaltet wird, wenn die Relativgeschwindigkeit zwischen dem Feinantrieb und den Spuren des Informationsträgers einen vorgebbaren Schwellwert ($\tau$) unterschreitet.

3. Verfahren nach Anspruch 1 oder 2, dadurch gekennzeichnet, daß der Feinantrieb vom Steuersignal während der Bremsphase stets in entgegengesetzter Richtung zur Bewegungsrichtung des Grobantriebes ausgelenkt wird.

4. Verfahren nach Anspruch 1 oder 2, dadurch gekennzeichnet, daß der Feinantrieb vom Steuersignal während der Bremsphase des Grobantriebes bis zu einem mechanischen Anschlag ausgelenkt wird.

5. Schaltungsanordnung zur Durchführung des Verfahrens nach Anspruch 1, 2 oder 4, dadurch gekennzeichnet, daß ein Spurdetektionssignal (SD) an den einen Kontakt eines steuerbaren Schalters (S) und an den Eingang eines Detektors (D) angelegt wird, daß der andere Kontakt des steuerbaren Schalters (S) mit dem Eingang eines Reglers (RF) des Feinantriebes verbunden ist, dessen Ausgang an den Eingang eines Stellgliedes (SF) des Feinantriebes angeschlossen ist, daß der Ausgang des Detektors (D) mit dem Takteingang (CL) eines Zählers (Z) und mit dem ersten Eingang eines ersten Und-Gatters (U1) verbunden ist, dessen Ausgang mit dem Eingang einer monostabilen Kippstufe (MF) verbunden ist, daß der Setzeingang (N) des Zählers (Z), dessen Ausgang (B) mit dem ersten Eingang eines zweiten Und-Gatters (U2), mit dem ersten Eingang eines dritten Und-Gatters (U3) und mit einem Eingang (E) einer Kontrolleinheit (K) verbunden ist, mit einem ersten Ausgang (A1) der Kontrolleinheit (K) verbunden ist, daß ein zweiter Ausgang (A2) der Kontrolleinheit (K) mit dem zweiten Eingang des zweiten Und-Gatters (U2) verbunden ist, dessen dritter Eingang mit dem $\overline{Q}$-Ausgang der monostabilen Kippstufe (MF) und mit dem Eingang eines ersten Inverters (I1) verbunden ist, daß der Ausgang des ersten Inverters (I1) mit dem zweiten Eingang des dritten Und-Gatters (U3) verbunden ist, dessen Ausgang mit dem Eingang des Stellgliedes (SF) des Feinantriebes verbunden ist, daß der Ausgang des zweiten Und-Gatters (U2) mit dem Eingang eines zweiten Inverters (I2) und mit dem Steuereingang des steuerbaren Schalters (S) verbunden ist, daß der Ausgang des zweiten Inverters (I2) mit dem zweiten Eingang des ersten Und-Gatters (U1) verbunden ist, daß der eine Eingang eines Stellgliedes (SG) des Grobantriebes mit einem dritten Ausgang (A3) der Kontrolleinheit (K) verbunden ist und daß der andere Eingang des Stellgliedes (SG) des Grobantriebes mit einem vierten Ausgang (A4) der Kontrolleinheit (K) verbunden ist.

6. Schaltungsanordnung zur Durchführung des Verfahrens nach Anspruch 1, 2 oder 3, dadurch gekennzeichnet, daß ein Spurdetektionssignal (SD) an den einen Kontakt eines steuerbaren Schalters (S) und an den Eingang eines Detektors (D) angelegt wird, daß der andere Kontakt des steuerbaren Schalters (S) mit dem Eingang eines Reglers (RF) des Feinantriebes verbunden ist, dessen Ausgang an den Eingang eines Stellgliedes (SF) des Feinantriebes angeschlossen ist, daß der Ausgang des Detektors (D) mit dem Takteingang (CL) eines Zählers (Z) und mit dem ersten Eingang eines ersten Und-Gatters (U1) verbunden ist, dessen Ausgang mit dem Eingang einer monostabilen Kippstufe (MF) verbunden ist, daß der Setzeingang (N) des Zählers (Z), dessen Ausgang (B) mit dem ersten Eingang eines zweiten Und-Gatters (U2), mit dem ersten Eingang eines dritten Und-Gatters (U3) und mit einem Eingang (E) einer Kontrolleinheit (K) verbunden ist, mit einem ersten Ausgang (A1) der Kontrolleinheit (K) verbunden ist, daß ein zweiter Ausgang (A2) der Kontrolleinheit (K) mit dem zweiten Eingang des zweiten Und-Gatters (U2) verbunden ist, dessen dritter Eingang mit dem $\overline{Q}$-Ausgang der monostabilen Kippstufe (MF) und mit dem Eingang eines ersten Inverters (I1) verbunden ist, daß der Ausgang des ersten Inverters (I1) mit dem zweiten Eingang des dritten Und-Gatters (U3) verbunden ist, dessen Ausgang mit einem ersten Eingang eines Impulsformers (IF) verbunden ist, daß der Ausgang des Impulsformers (IF) mit dem Eingang des Stellgliedes (SF) des Feinantriebes verbunden ist, daß der

Ausgang des zweiten Und-Gatters (U2) mit dem Eingang eines zweiten Inverters (I2), dessen Ausgang mit dem zweiten Eingang des ersten Und-Gatters (U1) verbunden ist, und mit dem Steuereingang des steuerbaren Schalters (S) verbunden ist und daß ein dritter Ausgang (A3) der Kontrolleinheit (K) mit einem zweiten Eingang des Impulsformers (IF) und mit dem einen Eingang des Stellgliedes (SG) des Grobantriebes verbunden ist, dessen anderer Eingang mit einem vierten Ausgang (A4) der Kontrolleinheit (K) verbunden ist.

**Claims**

1. A method of searching for a track on a rotating information carrier in the form of a disc, on the tracks of which, data can be written and/or from the tracks of which, data can be read by means of a writing and/or reading head which can be positioned over each track of the information carrier by means of a controllable coarse drive and by means of a controllable precision drive mechanically connected to the coarse drive, wherein, for the track search, the control loop of the precision drive is switched off and a control signal is applied to the precision drive in order to dampen mechanical oscillations of the precision drive which occur as a result of the inertia forces caused by the movement of the coarse drive, characterised in that the braking phase of the coarse drive is kept short by high deceleration, that the control signal for damping the mechanical oscillations of the precision drive is applied to the precision drive only during the braking phase, and at the same time, the control loop of the precision drive is switched off during the braking phase.

2. A method according to Claim 1, characterised in that the control loop of the precision drive is switched on again when the relative speed between the precision drive and the tracks of the information carrier drops below a threshold value (τ) which can be preset.

3. A method according to Claim 1 or 2, characterised in that, during the braking phase, the precision drive is always deflected, by the control signal, in the opposite direction to the direction of movement of the coarse drive.

4. A method according to Claim 1 or 2, characterised in that, during the braking phase of the coarse drive, the precision drive is deflected by the control signal as far as a mechanical stop.

5. A circuit arrangement for carrying out the method according to Claim 1, 2 or 4, characterised in that a track detection signal (SD) is applied to the one contact of a controllable switch (S) and to the input of a detector (D), that the other contact of the controllable switch (S) is connected to the input of a controller (RF) of the precision drive, the output of which is connected to the input of a final control element (SF) of the precision drive, that the output of the detector (D) is connected to the clock input (CL) of a counter (Z) and to the first input of a first AND gate (U1), the output of which is connected to the input of a monostable trigger stage (MF), that the set input (N) of the counter (Z), the output (B) of which is connected to the first input of a second AND gate (U2), to the first input of a third AND gate (U3) and to an input (E) of a control unit (K), is connected to a first output (A1) of the control unit (K), that a second output (A2) of the control unit (K) is connected to the second input of the second AND gate (U2), the third input of which is connected to the Q̄ output of the monostable trigger stage (MF) and to the input of a first inverter (I1), that the output of the first inverter (I1) is connected to the second input of the third AND gate (U3), the output of which is connected to the input of the final control element (SF) of the precision drive, that the output of the second AND gate (U2) is connected to the input of a second inverter (I2) and to the control input of the controllable switch (S), that the output of the second inverter (I2) is connected to the second input of the first AND gate (U1), that the one input of a final control element (SG) of the coarse drive is connected to a third output (A3) of the control unit (K), and that the other input of the final control element (SG) of the coarse drive is connected to a fourth output (A4) of the control unit (K).

6. A circuit arrangement for carrying out the method according to Claim 1, 2 or 3, characterised in that a track detection signal (SD) is applied to the one contact of a controllable switch (S) and to the input of a detector (D), that the other contact of the controllable switch (S) is connected to the input of a controller (RF) of the precision drive, the output of which is connected to the input of a final control element (SF) of the precision drive, that the output of the detector (D) is connected to the clock input (CL) of a counter (Z) and to the first input of a first AND gate (U1), the output of which is connected to the input of a monostable trigger stage (MF), that the set input (N) of the counter (Z), the output (B) of which is connected to the first input of a second AND gate (U2), to the first input of a third AND gate (U3) and to an input (E) of a control unit (K), is connected to a first output (A1) of the control unit (K), that a second output (A2) of the control unit (K) is connected to the second input of the second AND gate (U2), the third input of which is connected to the Q̄ output of the monostable trigger stage (MF) and to the input of a first inverter (I1), that the output of the first inverter (I1) is connected to the second input of the third AND gate (U3), the output of which is connected to a first input of a pulse shaper (IF), that the output of the pulse shaper (IF) is connected to the input of the final control element (SF) of the precision drive, that the output of the second AND gate (U2) is connected to the input of a second inverter (I2), the output of which is connected to the second input of the first AND gate (U1), and to the control input of the controllable switch (S), and that a third output (A3) of the control unit (K) is connected to a second input of the pulse shaper (IF) and to the one input of the final control element (SG) of the coarse drive, the other input of which is connected to a fourth output (A4) of the control unit (K).

## Revendications

1. Procédé de recherche de piste sur un support d'informations rotatif sous forme de disque, dont les pistes servent à enregistrer des données à l'aide d'une tête de lecture et/ou de lecture, qui peut être positionnée par un moyen d'entraînement grossier réglable et par un moyen d'entraînement fin réglable connecté mécaniquement au moyen d'entraînement grossier, ce circuit de réglage du moyen d'entraînement fin étant désactivé lors de la recherche de piste, et un signal de commande étant appliqué au moyen d'entraînement fin pour amortir les oscillations mécaniques du moyen d'entraînement fin résultant des forces d'inertie causées par le mouvement du moyen d'entraînement grossier, caractérisé par le fait que la phase de freinage du moyen d'entraînement grossier est de courte durée grâce à une décélération élevée, que le signal de commande servant à amortir les oscillations mécaniques du moyen d'entraînement fin n'est appliqué audit moyen d'entraînement fin que pendant la phase de freinage et que, simultanément, le circuit de régulation du moyen d'entraînement fin est désactivé pendant la phase de freinage.

2. Procédé selon la revendication 1, caractérisé en ce que le circuit de régulation du moyen d'entraînement fin est réactivé si la vitesse relative entre le moyen d'entraînement fin et les pistes du support d'informations décroît sous un seuil ($\tau$) prédéterminé.

3. Procédé selon la revendication 1 ou 2, caractérisé en ce que le moyen d'entraînement fin est dévié par le signal de commande pendant la phase de freinage toujours en contre-sens par rapport au mouvement de déplacement du moyen d'entraînement grossier.

4. Procédé selon la revendication 1 ou 2, caractérisé en ce que le moyen d'entraînement fin est dévié par le signal de commande pendant la phase de freinage du moyen d'entraînement grossier jusqu'à atteindre une butée mécanique.

5. Dispositif pour la mise en oeuvre du procédé selon la revendication 1, 2 ou 4, caractérisé en ce qu'un signal de détection de piste (SD) est appliqué à un contact d'un commutateur commandable (S) et à l'entrée d'un détecteur (D), que l'autre contact du commutateur commandable (S) est relié à l'entrée d'un régulateur (RF) du moyen d'entraînement fin, dont la sortie est reliée à l'entrée d'un circuit de commande (SF) du le moyen d'entraînement fin, que la sortie du détecteur (D) est reliée à l'entrée horloge (CL) d'un compteur (Z) et à la première entrée d'une première porte ET (U1), dont la sortie est reliée à l'entrée d'une bascule monostable (MF), que l'entrée de positionnement (N) du compteur (Z), dont la sortie (B) est reliée à la première entrée d'une deuxième porte ET (U2), à la première entrée d'une troisième porte ET (U3) et à une entrée (E) d'une unité de contrôle (K), est reliée à une première sortie (A1) de l'unité de contrôle (K), qu'une deuxième sortie (A2) de l'unité de contrôle (K) est reliée à une deuxième entrée de la deuxième porte ET (U2) dont la troisième entrée est reliée à la sortie $\overline{Q}$ de la bascule monostable (MF) et à l'entrée d'un premier inverseur (I1), que la sortie du premier inverseur (I1) est connectée à la deuxième entrée de la troisième porte ET (U3), dont la sortie est reliée à l'entrée du circuit de commande (SF) du moyen d'entraînement fin, que la sortie de la deuxième porte ET (U2) est reliée à l'entrée d'un deuxième inverseur (I2) et à l'entrée de commande du commutateur commandable (S), que la sortie du deuxième inverseur (I2) est reliée à la deuxième entrée de la première porte ET (U1), que l'une des entrées du circuit de commande (SG) du moyen d'entraînement grossier est reliée à une troisième sortie (A3) de l'unité de contrôle (K) et que l'autre entrée du circuit de commande (SG) du moyen d'entraînement grossier est reliée à une quatrième sortie (A4) de l'unité de contrôle (K).

6. Dispositif pour la mise en oeuvre du procédé selon la revendication 1, 2 ou 3, caractérisé en ce qu'un signal de détection de piste (SD) est appliqué à un contact d'un commutateur commandable (S) et à l'entrée d'un détecteur (D), que l'autre contact du commutateur commandable (S) est relié à l'entrée d'un régulateur (RF) du moyen d'entraînement fin, dont la sortie est reliée à l'entrée d'un circuit de commande (SF) du moyen d'entraînement fin, que la sortie du détecteur (D) est reliée à l'entrée horloge (C1) d'un compteur (Z) et à la première entrée d'une première porte ET (U1) dont la sortie est reliée à l'entrée d'une bascule monostable (MF), que l'entrée de positionnement (N) du compteur (Z), dont la sortie (B) est reliée à la première entrée d'une deuxième porte ET (U2), à la première entrée d'une troisième porte ET (U3) et à une entrée (E) d'une unité de contrôle (K), est reliée à une première sortie (A1) de l'unité de contrôle (K), qu'une deuxième sortie (A2) de l'unité de contrôle (K) est reliée à une deuxième entrée de la deuxième porte ET (U2) dont la troisième entrée est reliée à la sortie $\overline{Q}$ de la bascule monostable (MF) et à l'entrée d'un premier inverseur (I1), que la sortie du premier inverseur (I1) est connectée à la deuxième entrée de la troisième porte ET (U3), dont la sortie est reliée à une première entrée d'un circuit de mise en forme (IF), que la sortie du circuit de mise en forme (IF) est reliée à l'entrée du circuit de commande (SF) du moyen d'entraînement fin, que la sortie de la deuxième porte ET (U2) est reliée à l'entrée d'un deuxième inverseur (I2), dont la sortie est connectée à la deuxième entrée de la première porte ET (U1), et à l'entrée de commande du commutateur commandable (S), et qu'une troisième sortie (A3) de l'unité de contrôle (K) est reliée à une deuxième entrée du circuit de mise en forme (IF) et à l'une des entrées du circuit de commande (SG) du moyen d'entraînement grossier dont l'autre entrée est reliée à la quatrième sortie (A4) de l'unité de contrôle (K).

Fig.1

Fig. 2

Fig. 3